# EUROPEAN PATENT APPLICATION

(11) **EP 3 196 058 A1**
(43) Date of publication of application: **26.07.2017**
(21) Application number: 17150900.3
(22) Date of filing: 10.01.2017
(51) Int. Cl.: B60G 9/02, B60G 11/27, B60G 17/00

(54) **AN AXLE SUSPENSION SYSTEM FOR A TRACTOR**

(30) Priority: 25.01.2016 GB 201601298
(71) Applicant: AGCO International GmbH, 8212 Neuhausen am Rheinfall (CH)
(72) Inventor: Puustinen, Sami, 44201 Suolahti (FI)
(74) Representative: AGCO Intellectual Property Department

(57) **Abstract**

There is described an axle suspension system for a front axle of a tractor. The suspension system uses shock absorbers and an air bellows between the front axle and a front frame portion of the tractor to control the height of the front frame portion relative to the front axle. Accordingly, the position of the front frame portion may be maintained at a substantially constant vertical position, providing for improved driver comfort. The air bellows are positioned between the front axle and the front frame portion, thereby eliminating the need for additional mounting subframes in the suspension system.

## Description

### Field of the Invention

The present invention relates to a suspension system for an axle of an agricultural vehicle, in particular for a front axle of an agricultural tractor.

### Background of the Invention

In vehicles intended for off-road operation, such as agricultural tractors, ride suspension systems are used to provide for increased operator comfort.

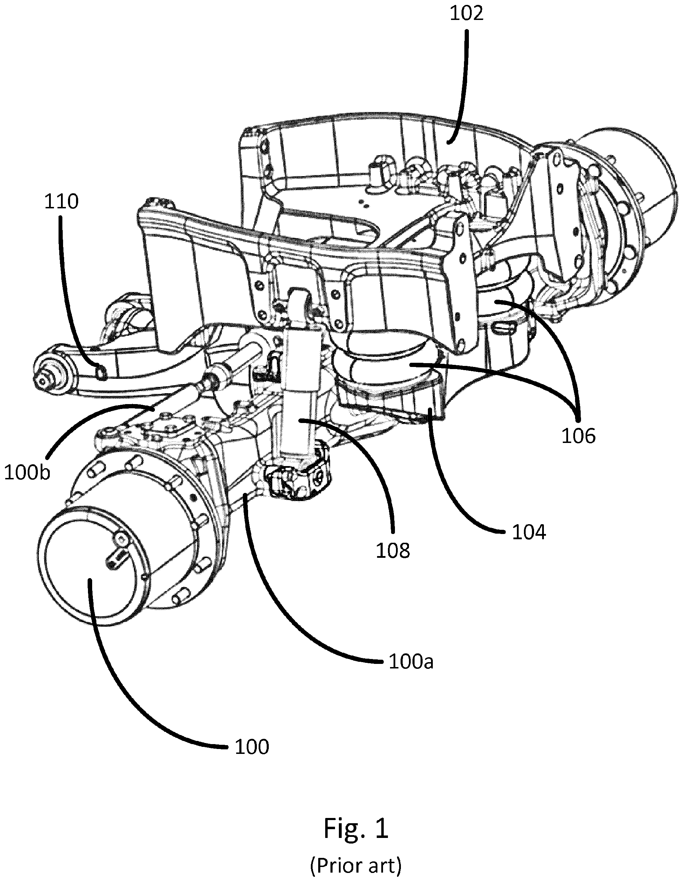

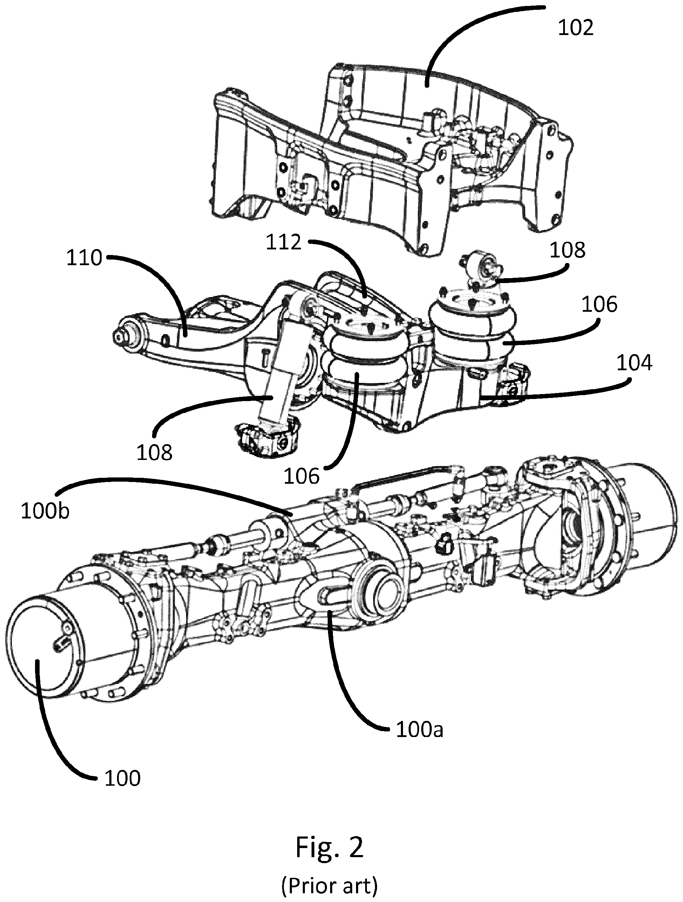

An example of a known suspension system is the Aires front axle air suspension system produced by Valtra Oy Ab of Finland for agricultural tractors. With reference to Figs. 1 and 2, the Aires system comprises a front axle 100 positioned beneath a front portion 102 of the structural frame of the tractor. The system comprises a subframe portion 104 which is attached to the front axle 100, at a forward-facing side 100a of the front axle 100. A pair of air bellows 106 are mounted to the subframe 104 and used to support the front frame portion 102. Shock absorbers 108 are arranged to extend between the axle 100 and the front frame portion 102, one of which is shown in Fig. 1.

A further subframe 110 hingedly connects the front axle 100 with the structural frame of the tractor (not shown), allowing the front axle 100 to move relative to the structural frame. The hinging subframe 110 is coupled with the front axle 100 at a rearward-facing side 100b of the front axle 100. With reference to Fig. 2, showing a partially exploded view of the suspension system, the subframe 104 is coupled with the hinging subframe 110 by a bridging section 112 which extends over an upper surface of the front axle 100, connecting the forward- and rearward-facing sides 100a,100b of the front axle 100.

Selective filling or draining of the bellows 106 using an attached air compressor (not shown) acts to control the height of the front frame portion 102, and accordingly the forward portion of the tractor, relative to the front axle 100. The shock absorbers 108 can act to control damping of the system. As a result, the Aires suspension system is controlled such that the height of the forward portion of the tractor above ground can remain fixed, while the front axle 100 can moves along a substantially vertical axis, due to undulations in the ground surface.

While the Aires system provides for improved ride smoothness for operators, the system is not without drawbacks. Firstly, the use of additional subframes to support the air bellows introduces additional cost and weight into the overall tractor designs. Also, as the subframes require attachments to the front axle, this results in additional complication during servicing or repair of the front axle of the tractor.

A further example of prior art suspension systems is provided in European Patent Application Publication No. EP 2329969 A1, which illustrates a front axle, where the suspension system is built into the axle itself. Such a construction requires that each axle is tailor-made for the vehicle and application in question, which increases component cost and design complexity. In addition, any servicing of the suspension system itself requires disassembly of the entire front axle.

It is an object of the invention to provide a suspension system addressing the above issues.

### Summary of the Invention

Accordingly, there is provided an axle suspension system for an agricultural tractor, the axle suspension system comprising:
a front axle, preferably a rigid front axle;
a front frame portion positioned above the front axle for attachment with a structural frame of a tractor;
at least one shock absorber coupled between the front axle and the front frame portion; and
air bellows coupled to the front axle and the front frame portion, wherein the air bellows is positioned in the space between the front axle and the front frame portion.

As the bellows are located between the front axle and the front frame portion, accordingly there is no requirement for additional subframes to support the bellows. As a result, the cost and weight of the suspension system is reduced relative to the prior art. Furthermore, the reduction in subframes attached to the front axle presents a front axle which is more easily serviced than in prior art axle suspension systems. It will be understood that the front axle is preferably provided as a rigid front axle, and not as a suspended axle.

While in a preferred embodiment, the system comprises a single air bellows, it will be understood that multiple air bellows may be positioned between the front axle and the front frame portion. In a preferred embodiment, the system comprises first and second shock absorbers arranged at opposed sides of the front frame portion to couple with the front axle, but it will be understood that any number of shock absorbers may be used between the elements, to provide for appropriate damping of the suspension system.

Preferably, the air bellows is directly connected or coupled to the front axle and to the front frame portion.

By directly connecting or coupling the air bellows between the axle and frame, the need for additional components is eliminated, thereby reducing the cost and weight of the system.

Preferably, an axle-facing surface of the front frame portion is shaped to accommodate the air bellows. Further preferably, the axle-facing surface of the front frame portion comprises a channel to receive an upper end of the air bellows.

Preferably, an upper surface of the front axle is shaped to accommodate the air bellows. Further preferably, the upper surface of the front axle comprises a seat or channel to receive a lower end of the air bellows

By providing shaped surfaces in the front frame portion and/or the front axle to receive the air bellows, accordingly the air bellows can be securely retained in place between the components. The use of channels or seats defined in the surfaces of the components may be used in conjunction with additional fasteners or securing elements to hold the air bellows in position. Alternatively, the air bellows may be held in place between the components by the shaped surfaces alone.

Preferably, the system further comprises a swing frame mounted to the front axle, wherein the swing frame may be hingedly coupled to the structural frame of a tractor, to allow the front axle to move relative to the structural frame.

Preferably, the front frame portion comprises a hinge stop to receive a section of the swing frame, to prevent excessive hinging of the swing frame and the front axle.

Preferably, the system further comprises an air compressor coupled with the air bellows, the compressor configured to supply air to or drain air from the bellows to control the height of the front frame portion relative to the height of the front axle.

The air compressor is controlled to maintain the front frame portion at a substantially constant height, regardless of movement of the front axle, e.g. due to ground undulations.

Preferably, the system further comprises a controller arranged to adjust the operation of the air compressor, such that the controller is operable to maintain the height of the front frame portion.

In a preferred aspect, the controller is arranged to control the height of the front frame portion based on a user-defined setting.

The controller may be coupled with a user input device, such that the controller can receive user-defined data to select a mode of operation of the suspension system. For example, a user may select between an off-road suspension setting and an on-road suspension setting, wherein the sensitivity of the suspension system and/or the height of the front frame portion relative to the front axle may be adjusted dependent on the selected setting.

Preferably, the system comprises sensors to detect movement of the front axle, wherein the height of the front frame portion is adjusted based on the detected movement of the front axle. Such sensor may comprise position sensors arranged to detect movement of the front axle relative to the front frame portion.

Additionally or alternatively, the system comprises sensors arranged to scan the ground forward of the suspension system, and to control the height of the front frame portion based on said scan.

By monitoring the ground profile in front of the suspension system, e.g. by scanning the ground in front of tractor, accordingly the height profile of the oncoming ground may be determined. As a result, the system may be able to adjust operation to control the height of the front frame portion based on detected variations in the height of the oncoming surface, thereby providing a predictive control of the suspension system.

The sensors may comprise any suitable sensors arranged to measure distance, e.g. ultrasonic sensors, infrared sensors, capacitive sensors, radar, etc.

There is further provided an agricultural tractor, the tractor having a structural frame and an axle suspension system as described above.

### Detailed Description of the Invention

Embodiments of the invention will now be described, by way of example only, with reference to the accompanying drawings, in which:
Fig. 1 is a perspective view of a prior art tractor suspension system;
Fig. 2 is a partly exploded view of the system of Fig. 1;
Fig. 3 is an illustration of an agricultural tractor according to the invention;
Fig. 4 is a perspective view of an axle suspension system according to the invention;
Fig. 5 is a partly exploded view of the system of Fig. 4; and
Fig. 6 is a cross-sectional view of the system of Fig. 4.

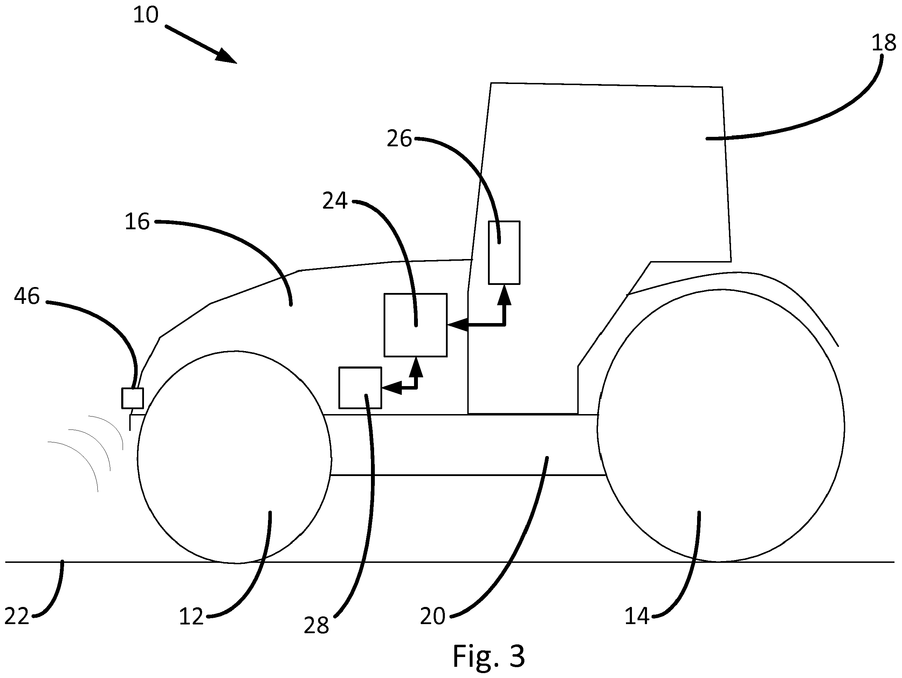

In Fig. 3, a vehicle in the form of an agricultural tractor is indicated at 10. The tractor 10 comprises front wheels 12, rear wheels 14, an engine section 16 and a cab section 18. The tractor 10 is provided with a structural frame 20, which extends between the front and rear wheels 12,14, providing structural support for the tractor body as it travels on the ground 22.

The tractor 10 further comprises at least one Electronic Control Unit (ECU) 24, which is arranged to control operation of various tractor systems. The cab section 18 is provided with operator controls 26 for control of the different components of the tractor 10. The operator controls 26 may comprise mechanical levers and/or electronic control systems incorporating configurable switches, touchscreen displays, etc. It will be understood that the ECU 24 is provided in communication with the operator controls 26. The tractor 10 further comprises at least one air compressor 28 controlled by the ECU 24, the air compressor 28 arranged to supply or drain air to different consumers provided on the tractor 10.

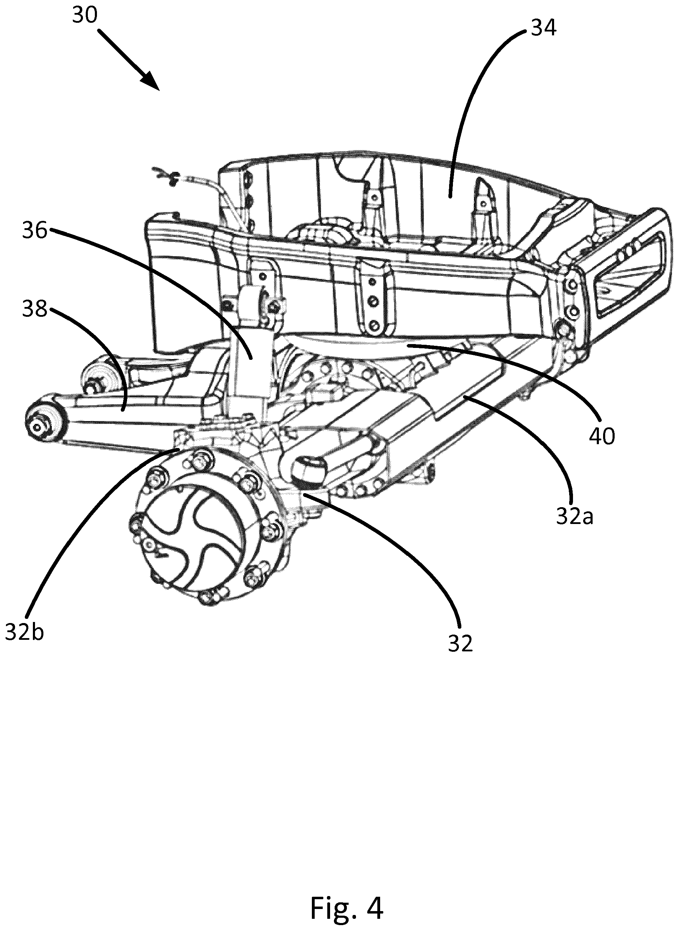

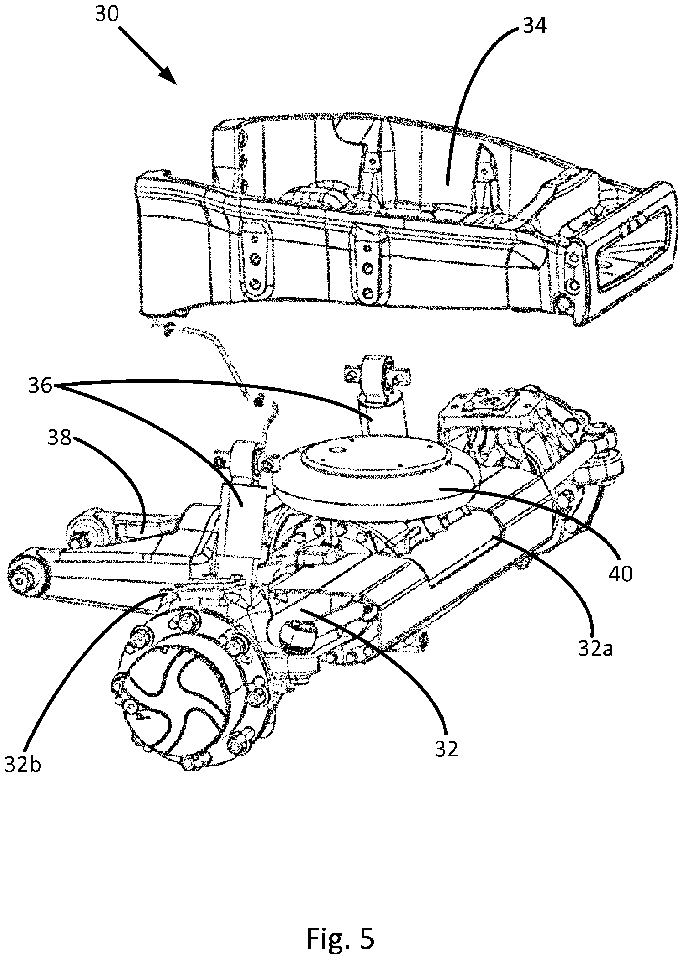

With reference to Figs. 4 and 5, an axle suspension system according to the invention is indicated at 30. The suspension system 30 comprises a rigid front axle 32 positioned beneath a front frame portion 34 of the structural frame 20 of the tractor 10, the front axle 32 having a forward-facing side 32a and a rearward facing side 32b. The front wheels 12 of the tractor 10 are provided on the front axle 32. It will be understood that the front frame portion 34 may be provided as an integral part of the structural frame 20, or may be a separately-attachable frame piece which can be bolted to a tractor structural frame 20.

A pair of shock absorbers 36 are connected between the front axle 32 and the front frame portion 34, the shock absorbers positioned at opposed sides of the front frame portion 34 in a widthwise direction.

A swing frame 38 is mounted to a rearward-facing side 32b of the front axle 32 at a first end of the swing frame 38, with the opposite end of the swing frame 38 hingedly coupled with the structural frame 20 of the tractor 10. The swing frame 38 allows the front axle 32 to move relative to the tractor structural frame 20 and the attached front frame portion 34. An air bellows 40 is positioned in the space between the front axle 32 and the front frame portion 34, the air bellows 40 providing support between the front axle 32 and the front frame portion 34. The air bellows 40 is coupled with the air compressor 28 (Fig. 3), such that the bellows 40 may be selectively filled or drained with air supplied from the compressor 28.

Through selective control of the air supply from the compressor 28, the bellows 40 can be controlled to adjust the height of the front frame portion 34, and by extension the height of the structural frame 20 of the tractor 10, relative to the height of the front axle 32. Accordingly, as the front axle 32 of the tractor 10 experiences variations in vertical position, e.g. due to movement over uneven ground terrain, the air bellows 40 can be controlled in response to such movement so that the front frame portion 34 is maintained at substantially the same vertical position, thereby providing for improved ride comfort.

By arranging the air bellows 40 in the space between the front axle 32 and the front frame portion 34, accordingly there is no requirement for the use of additional subframes to support the bellows 40. As a result, the cost and weight of the suspension system is reduced relative to the prior art. Furthermore, the removal of additional subframes which are attached to the front axle 32 provides presents a front axle and suspension system which is more easily serviced than in prior art axle suspension systems.

While the embodiment of Figs. 4 and 5 illustrates a system having a single air bellows 40, it will be understood that a plurality of air bellows may be provided between the front axle 32 and the front frame portion 34.

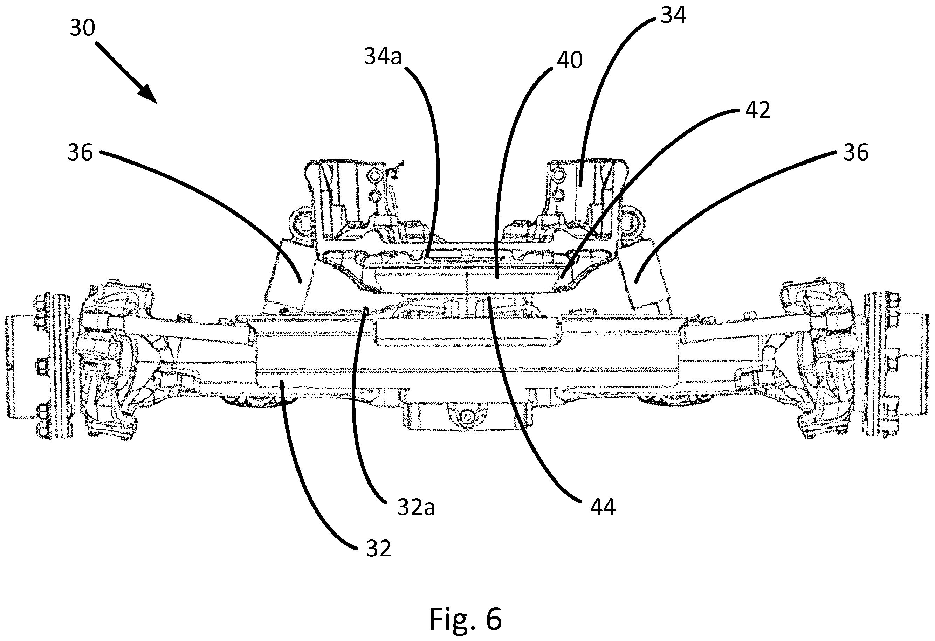

With reference to the cross-sectional view in Fig. 6 which is taken in a widthwise direction through the centre of the front axle 32 and the front frame portion 34, the air bellows 40 are positioned in the space between the front axle 32 and the front frame portion 34. In particular, an upper end of the air bellows 40 is received within a channel 42 defined in the axle-facing surface 34a of the front frame portion 34, with a lower end of the bellows 40 positioned on a complementary seat 44 defined on the upper surface 32a of the front axle 32. Providing the complimentary shaped surfaces in the front frame portion 34 and the front axle 32 allows the air bellows 40 to be securely retained in place between the components. It will be understood that the bellows 40 may be secured to the axle 32 and/or frame portion 34 through use of suitable retainers, e.g. bolts or screws, or the bellows 40 may be held in position by way of the shaped surfaces alone.

It will be understood that the front frame portion 34 may comprise a hinge stop or barrier member defined on the axle-facing surface 34a of the front frame portion 34. The hinge stop may be positioned to bear against a portion of the swing frame 38, to prevent excessive hinging of the swing frame 38 and the front axle 32 relative to the front frame portion 34.

The ECU 24 can control the operation of the suspension system 30 based on any combination of different factors. In a first aspect, the ECU 24 may be arranged to control the height of the front frame portion based on a user-defined setting. For example, the ECU 24 may receive from the operator controls 26 a user-defined suspension setting, wherein the sensitivity and responsiveness of the suspension system and/or the height of the front frame portion relative to the front axle may be adjusted dependent on the selected setting, e.g. through selection of an off-road suspension setting and an on-road suspension setting.

Additionally or alternatively, the ECU 24 receives data from sensors (not shown) provided on the tractor 10 to detect movement of the front axle 32, such that the height of the front frame portion 34 is adjusted based on the detected movement of the front axle 32. Such sensors may be integrated into the design of the suspension system 30.

Additionally or alternatively, the system 30 comprises sensors 46 arranged to scan the ground 22 forward of the suspension system, and to control the height of the front frame portion 34 based on said scan. By monitoring the ground profile in front of the suspension system, e.g. by scanning the ground 22 in front of tractor 10, accordingly the height profile of the oncoming ground may be determined. As a result, the ECU 24 can adjust operation to control the height of the front frame portion 34 based on detected variations in the height of the oncoming surface 22, thereby providing a predictive control of the suspension system 30.

It will be understood that the sensors used by the suspension system 30 may comprise any suitable sensors arranged to measure distance, e.g. ultrasonic sensors, infrared sensors, capacitive sensors, radar, etc.

The invention is not limited to the embodiments described herein, and may be modified or adapted without departing from the scope of the present invention.

## Claims

1. An axle suspension system for an agricultural tractor, the axle suspension system comprising:
a front axle, preferably a rigid front axle;
a front frame portion positioned above the front axle for attachment with a structural frame of a tractor;
at least one shock absorber coupled between the front axle and the front frame portion; and
air bellows coupled to the front axle and the front frame portion, wherein the air bellows is positioned in the space between the front axle and the front frame portion.

2. The axle suspension system of claim 1, wherein the air bellows is directly coupled to the front axle and to the front frame portion.

3. The axle suspension system of claim 1 or claim 2, wherein an axle-facing surface of the front frame portion is shaped to accommodate the air bellows.

4. The axle suspension system of claim 3, wherein the axle-facing surface of the front frame portion comprises a channel to receive an upper end of the air bellows.

5. The axle suspension system of any preceding claim, wherein an upper surface of the front axle is shaped to accommodate the air bellows.

6. The axle suspension system of claim 5, wherein the upper surface of the front axle comprises a seat or channel to receive a lower end of the air bellows

7. The axle suspension system of any preceding claim, wherein the system further comprises a swing frame mounted to the front axle, wherein the swing frame may be hingedly coupled to the structural frame of a tractor, to allow the front axle to move relative to the structural frame.

8. The axle suspension system of claim 7, wherein the front frame portion comprises a hinge stop to receive a section of the swing frame, to prevent excessive hinging of the swing frame and the front axle.

9. The axle suspension system of any preceding claim, wherein the system further comprises an air compressor coupled with the air bellows, the compressor configured to supply air to or drain air from the bellows to control the height of the front frame portion relative to the height of the front axle.

10. The axle suspension system of any preceding claim, wherein the system further comprises a controller arranged to adjust the operation of the air compressor, such that the controller is operable to maintain the height of the front frame portion.

11. The axle suspension system of claim 10, wherein the controller is arranged to control the height of the front frame portion based on a user-defined setting.

12. The axle suspension system of any preceding claim, wherein the system comprises sensors to detect movement of the front axle, wherein the height of the front frame portion is adjusted based on the detected movement of the front axle.

13. The axle suspension system of any preceding claim, wherein the system comprises sensors arranged to scan the ground forward of the suspension system, and to control the height of the front frame portion based on said scan.

14. The axle suspension system of claim 12 or claim 13, wherein the sensors may be selected from one or more of the following: ultrasonic sensors, infrared sensors, capacitive sensors, radar.

15. An agricultural tractor, the tractor having a structural frame and an axle suspension system as claimed in any one of claims 1-14.
